# EUROPÄISCHE PATENTSCHRIFT

(11) **EP 0 961 863 B1**
(45) Veröffentlichungstag und Bekanntmachung des Hinweises auf die Patenterteilung: **25.09.2002**
(21) Anmeldenummer: 98958239.0
(22) Anmeldetag: 02.11.1998
(51) Int. Cl.: E05F 15/16, E05F 15/10

(54) **BEWEGLICHES FENSTERELEMENT**
MOVEABLE WINDOW ELEMENT
ELEMENT FENETRE MOBILE

(30) Priorität: 01.12.1997 DE 29721054 U
(43) Veröffentlichungstag der Anmeldung: 08.12.1999
(73) Patentinhaber: METEOR GUMMIWERKE K.H. BÄDJE GMBH & CO., 31167 Bockenem (DE)
(72) Erfinder: HILL, Alistair, D-31139 Hildesheim (DE)
(74) Vertreter: Sobisch, Peter, Dipl.-Ing.
(86) Internationale Anmeldenummer: EP9806926
(87) Internationale Veröffentlichungsnummer: WO99028583

(56) Entgegenhaltungen:
- WO-A1-97/12775
- GB-A- 2 268 287
- GB-A- 2 288 036
- GB-A- 2 289 351

## Beschreibung

Die Erfindung betrifft ein bewegliches Fensterelement mit einer in einem Schacht eines Wandelements versenkbaren Fensterscheibe sowie eine Motorsteuerung für einen elektrischen Fensterhebermotor.

Aus der Praxis sind bewegliche Fensterelemente in Form von Pkw-Türen bekannt, bei denen eine Fensterscheibe in einem Schacht eines Wandelements versenkbar ist. Die Fensterscheibe wird gegenüber dem Wandelement mittels Führungselementen geführt und kann mittels eines motorischen Antriebs zwischen einer offenen und einer geschlossenen Endlage verfahren werden. Zur Führung der Fensterscheibe werden neben dreidimensionalen Führungsschienen, welche die Fensterscheibe an ihren Seiten fassen, Schachtabdichtungen verwendet.

Für den Motor eines solchen beweglichen Fensterelements ist in der GB-A - 2 289 351 eine Sicherheitsvorrichtung offenbart, die den Motor dann anhält oder in die Gegenrichtung umsteuert, wenn durch die schließende Fensterscheibe ein Gegenstand eingeklemmt wird.

In der Praxis hat sich gezeigt, daß beim Verfahren der Fensterscheibe mittels des motorischen Antriebs in Abhängigkeit von der Umgebungstemperatur und der Feuchtigkeit auf der Scheibe im Bereich der Schachtabdichtungen unangenehme Geräusche entstehen. Zur Beseitigung dieser Geräusche sind Schachtabdichtungen mit Belägen entwickelt worden. In der DE-U1-29 515 597 ist der vermutete Mechanismus bei der Geräuschentstehung, der als Slip-Stick-Effekt bezeichnet wird, beschrieben worden. Ferner sind in der DE-U1-29 515 597 verschiedene Beläge zur Geräuschreduzierung beim Verfahren der Fensterscheibe beschrieben worden.

Es hat sich jedoch gezeigt, daß die bekannten Antiquietsch-Beläge die Geräuschentwicklung nicht in jedem Fall im gewünschten Maß verhindern können. Der Erfindung liegt daher die Aufgabe zugrunde, die Geräuschentwicklung beim Verfahren einer Fensterscheibe eines beweglichen Fensterelements weiter zu vermindern.

Die Lösung dieser Aufgabe erfolgt erfindungsgemäß mit den Merkmalen der Ansprüche 1 bzw. 9.

Gemäß der Erfindung ist vorgesehen, daß der motorische Antrieb in einem Ungleichförmigkeitsmodus betätigbar ist, in welchem die Verfahrgeschwindigkeit der Fensterscheibe in einer Transportphase nach Abschluß einer Anlaufphase wiederholt zwischen einem relativ hohen und einem relativ niedrigen Geschwindigkeitswert variiert wird. Dies wird vorzugsweise mittels einer erfindungsgemäßen Motorsteuerung für einen elektrischen Fensterhebermotor erreicht, welche ein Steuerungsmodul aufweist, das im aktivierten Zustand den elektrischen Fensterhebermotor mit ungleichförmiger, wiederholt zwischen einem ersten oberen und einem zweiten unteren Drehzahlwert hin und her geschalteter Drehzahl antreibt. Durch die ungleichförmige Bewegung der Fensterscheibe wird die Geräuschentwicklung beim Verfahren erheblich reduziert. Alternativ dazu kann die ungleichförmige Bewegung der Scheibe durch den motorischen Antrieb im Ungleichförmigkeitsmodus auch durch ein Getriebe erzeugt werden.

Vorzugsweise ist bei einem erfindungsgemäßen beweglichen Fensterelement als motorischer Antrieb ein Elektromotor vorgesehen. Ein Elektromotor bietet den Vorteil einer leichten Steuerbarkeit. Bei einer in einem solchen Fall vorgesehenen Steuerung kann vorteilhaft das Steuerungsmodul für den Ungleichförmigkeitsmodus mit einem Modul für den Kurzhub der Scheibe zum Öffnen und Schließen der Tür in eine gemeinsame integrierte Schaltung integriert sein.

Gemäß einer bevorzugten Ausführungsform der Erfindung ist vorgesehen, im Ungleichförmigkeitsmodus den motorischen Antrieb zwischen einer ersten oberen und einer zweiten unteren Drehzahl hin und her zu schalten. Ein solches Hin- und Herschalten läßt sich steuerungstechnisch mit einfachen Mitteln erreichen.

Als bevorzugte Alternative zum Hin- und Herschalten zwischen zwei Drehzahlen ist gemäß einer weiteren bevorzugten Ausführungsform der Erfindung vorgesehen, daß der motorische Antrieb eine vorzugsweise elektronische Antriebssteuerung aufweist, die in der Transportphase einer Basisdrehzahl eines Elektromotors eine Drehzahlkomponente mit im wesentlichen sinus-förmigem Verlauf überlagert. Durch eine solche Antriebssteuerung werden die Motorgeräusche reduziert und die optische Wahrnehmbarkeit des ungleichförmigen Antriebs der Fensterscheibe erschwert.

Da denkbar ist, daß Benutzer eines erfindungsgemäßen beweglichen Fensterelements den ungleichförmigen Antrieb der Fensterscheibe als Betriebsstörung mißverstehen können, ist vorgesehen, den Ungleichförmigkeitsmodus nur dann zu aktivieren, wenn eine unangenehme Geräuschentwicklung zu befürchten ist. Um dies zu erreichen, kann das bewegliche Fensterelement mit einer Sensorvorrichtung versehen sein, die das Widerstandsmoment ermittelt, das beim Verfahren der Fensterscheiben dem motorischen Antrieb entgegenwirkt. Durch Auswertung der Meßwerte dieser Sensorvorrichtung in einer Aktivierungsvorrichtung ist der Ungleichförmigkeitsmodus des motorischen Antriebs aktivierbar.

Wenn für den motorische Antrieb ein Elektromotor vorgesehen ist, sind vorzugsweise zur Bestimmung des Widerstandsmoments, das beim Verfahren der Fensterscheibe den Elektromotor entgegenwirkt, die Leistungsaufnahme des Elektromotors überwachende Meßwandler vorzusehen, deren Ausgangssignale einer Aktivierungsvorrichtung zugeführt werden, die den Ungleichförmigkeitsmodus des motorischen Antriebs aktiviert.

Weitere vorteilhafte Ausgestaltungen und Weiterbildungen der Erfindung ergeben sich aus den übrigen Unteransprüchen sowie aus der Beschreibung im Zusammenhang mit den Zeichnungen. Es zeigen:
- Fig. 1: ein als Kabriolettür ausgeführtes erfindungsgemäßes bewegliches Fensterelement mit einer eine Fensterscheibe führenden Schachtabdichtung,
- Fig. 2: einen Schnitt durch die Kabriolettür im Bereich der Schachtabdichtung gemäß der Linie II-II in Fig. 1,
- Fig. 3: ein den Verlauf der Kraft, der Geschwindigkeit und der Geräuschentwicklung beim Schließen eines Fensters durch Verfahren der Fensterscheibe zeigendes Diagramm,
- Fig. 4: ein Flußdiagramm zur Erläuterung der Steuerungsvorgänge beim Schließen eines Fensters durch Verfahren der Fensterscheibe und
- Fig. 5: ein Flußdiagramm zur Erläuterung der Steuerungsvorgänge beim Öffnen eines Fensters durch Verfahren der Fensterscheibe.

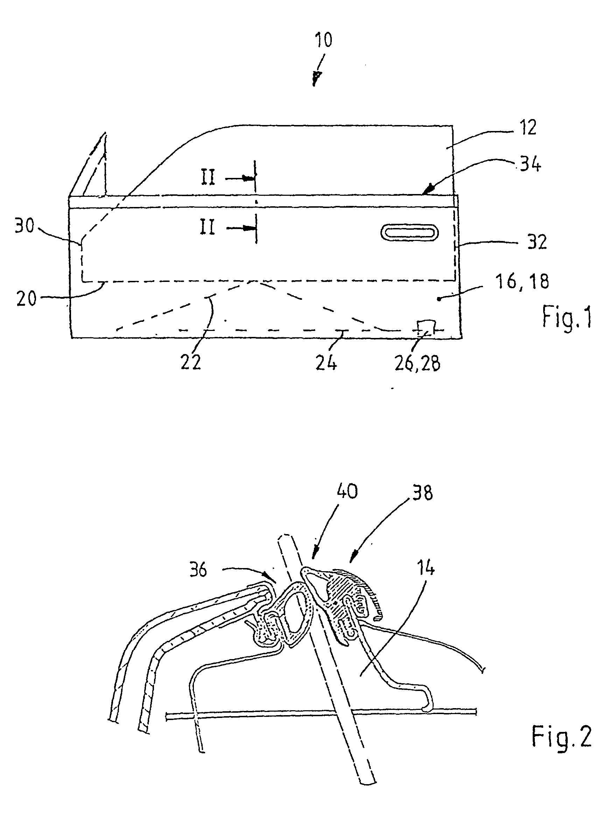

Eine in Fig. 1 gezeigte Kabriolettür 10 weist eine dreidimensional gekrümmte Fensterscheibe 12 auf, welche in einem Schacht 14 eines als Türflügel 16 ausgebildeten Wandelements 18 versenkbar ist. Zum Heben und Senken ist innerhalb des Türflügels 16 eine an einer Unterkante 20 der Fensterscheibe 12 angreifende Scherenkonstruktion vorgesehen, die über eine Spindel 24 von einem als motorischer Antrieb 26 vorgesehenen Elektromotor 28 angetrieben wird. Die Fensterscheibe 12 wird an ihren Seitenkanten 30, 32 innerhalb des Türflügels 16 von Führungsschienen (nicht gezeigt) gehalten und im Bereich der Oberkante 34 des Türflügels 16 mittels einer ein inneres Dichtelement 36 und ein äußeres Dichtelement 38 aufweisenden Schachtabdichtung 40. Das innere Dichtelement 36 ist ein polyamid-sinterbeschichtes Fensterführungsprofil aus EPDM-Weichgummi der Härte 60 Shore A mit profilierter Stahlblecheinlage als Festigkeitsträger im Montagebereich. Das äußere Dichtelement 38 ist ein beflocktes Fensterführungsprofil, Duplex mit Stahldrahtfestigkeitsträger aus EPDM der Härte 50 bis 90 Shore A. Einzelheiten der Schachtabdichtung sind in dem Aufsatz "Elastomer-Dichtsysteme in Kraftfahrzeug-Karosserien" in der Zeitschrift "Kautschuk + Gummi. Kunststoff" 1/91 veröffentlicht.

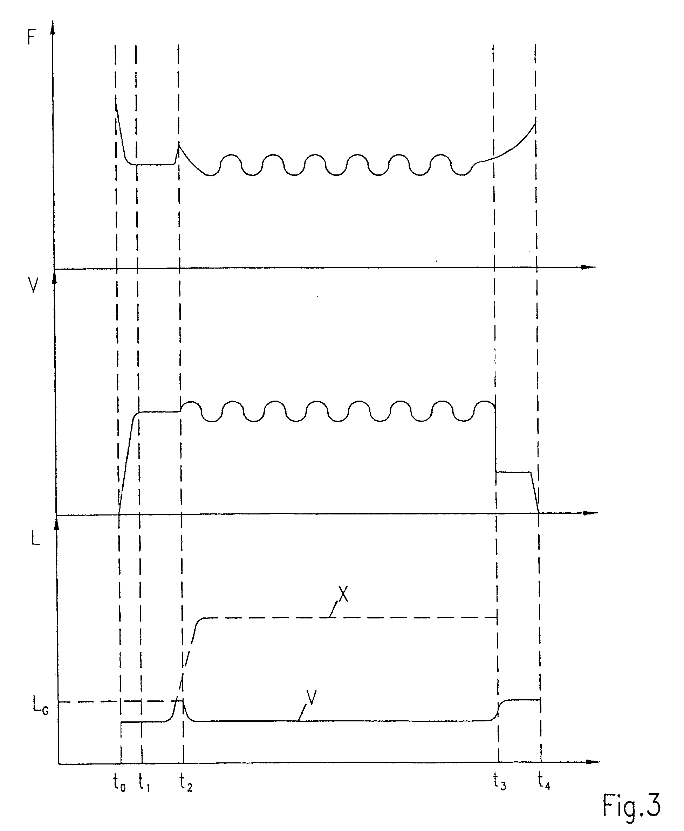

Beim Schließen eines Fensters, also beim Herausfahren der Fensterscheibe 12 aus dem Türflügel 16, treten die in Fig. 3 gezeigten Kräfte F, Geschwindigkeiten v und Geräusche L auf. In dem Diagramm sind mit t die folgenden Zeitpunkte bezeichnet:
- t₀: Beginn des Schließens
- t₁: Abschluß der Anlaufphase
- t₂: Überschreiten eines Grenzwerts L_{G} und Aktivierung des Ungleichförmigksmodus
- t₃: Beginn der Andruckphase
- t₄: Fenster geschlossen.

Während beim Schließen eines Fensters mittels eines Elektromotors gemäß dem Stand der Technik bei ungünstigen Bedingungen der in Fig. 3 gestrichelt dargestellte und mit X bezeichnete Geräuschverlauf auftreten konnte, wird durch den gemäß der Erfindung vorgesehenen Ungleichförmigkeitsmodus, welcher im Zeitpunkt t₂ aktiviert und im Zeitpunkt t₃ abgeschaltet wird, eine Geräuschreduktion erreicht, welche durch den Geräuschverlauf L in Fig. 3 dargestellt ist. Der in Fig. 3 gezeigte Ungleichförmigkeitsmodus zeichnet sich durch eine Grundgeschwindigkeit mit überlagertem Sinusanteil aus.

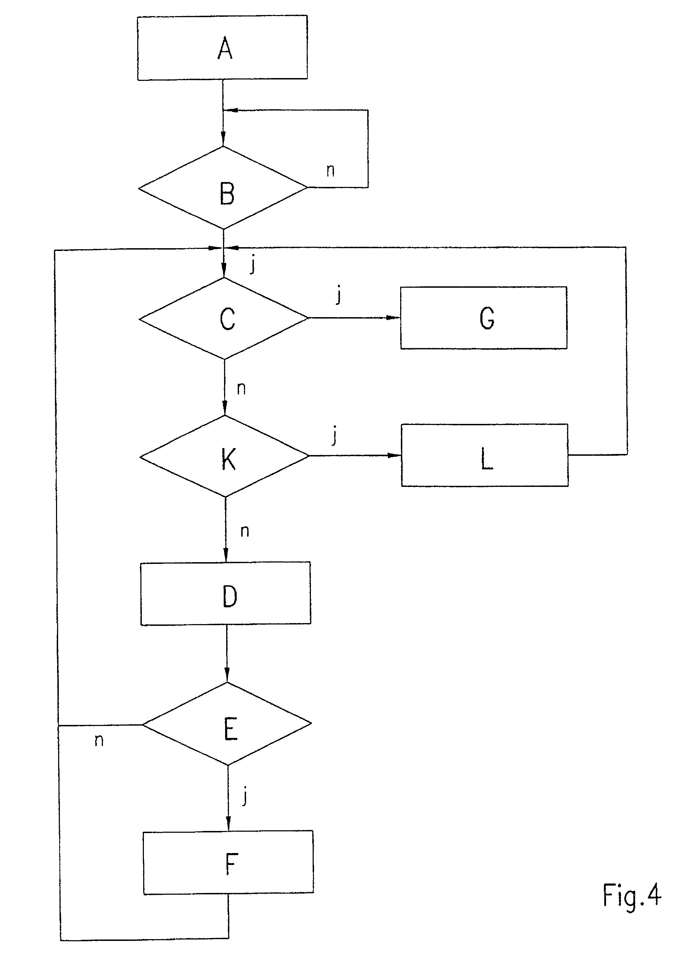

Das in Fig. 4 gezeigte Flußdiagramm dient der Erläuterung der Steuerungsvorgänge beim Schließen des Fensters. Zunächst wird in Schritt A durch einen Bediener über einen Schalter und eine Steuerung der Elektromotor 28 eingeschaltet. Gleichzeitig wird ein Zeitschalter betätigt, um während der Anlaufphase zwischen den Zeitpunkten t₀ und t₁ die Steuerung für den Ungleichförmigkeitsmodus inaktiv zu halten. Nach der Feststellung in Schritt B, daß die Anlaufphase abgeschlossen ist, wird in Schritt C überprüft, ob die Scheibe bereits in ihre Endlage bewegt ist. Dazu wird ein Endlagenschalter abgefragt und in dem Fall, daß sich die Scheibe in der Endlage befindet, in Schritt G der Motor abgeschaltet. Wenn sich die Scheibe nicht in ihrer Endlage befindet, wird in Schritt K abgefragt, ob die Scheibe sich bereits im Annäherungsbereich an eine seitliche Dachrahmendichtung befindet. Ist dies der Fall, wird der Motor in Schritt L in einen Langsamlaufmodus geschaltet. Ist dies nicht der Fall, wird in Schritt D das den Elektromotor 28 bremsende Widerstandsmoment ermittelt. Wenn in Schritt E festgestellt wird, daß das Widerstandsmoment einen Grenzwert nicht überschreitet, kehrt die Steuerung zu Schritt C zurück. Wenn ein vorgegebener Grenzwert überschritten wird, wird in Schritt F der Ungleichförmigkeitsmodus aktiviert, und die Steuerung kehrt anschließend zu Schritt C zurück.

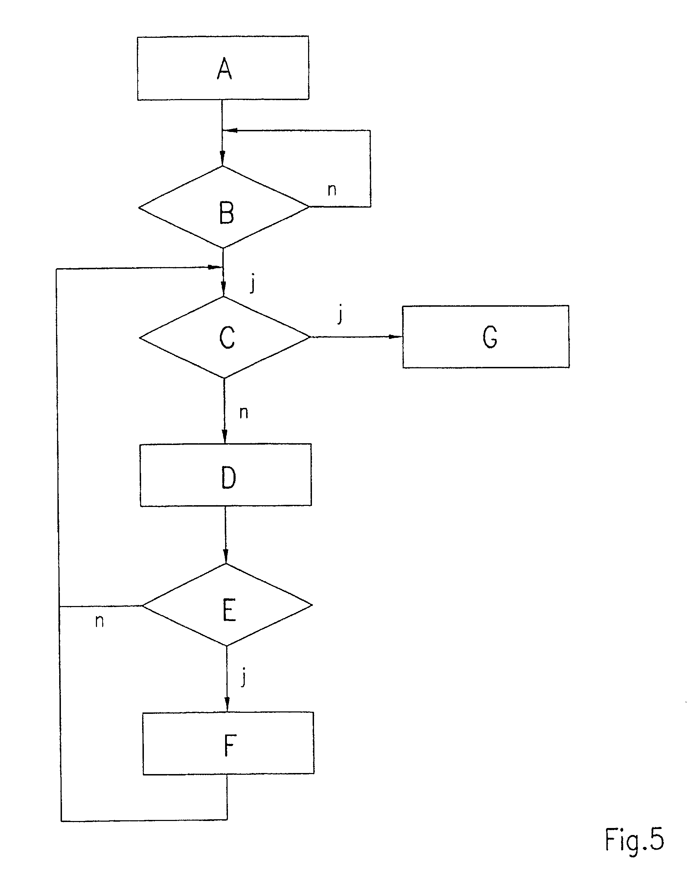

Die in dem Flußdiagramm in Fig. 5 dargestellten Steuerungsvorgänge beim Öffnen eines Fensters entsprechen im Wesentlichen den Steuerungsvorgängen, die bereits im Zusammenhang mit dem Flußdiagramm für das Schließen in Fig. 4 beschrieben worden sind. Daher sind zur Bezeichnung gleicher Steuerungsschritte gleiche Buchstaben verwendet worden. Auf die entsprechende Beschreibung im Zusammenhang mit dem Flußdiagramm in Fig. 4 wird hiermit ausdrücklich verwiesen. Wichtig ist in diesem Zusammenhang die Feststellung, daß sich die Steuerungsvorgänge beim Öffnen von denen beim Schließen lediglich dadurch unterscheiden, daß die Schritte K und L beim Öffnen wegfallen, da ein Abbremsen der Scheibe vor Erreichen der unteren Endlage nicht erforderlich ist.

## Patentansprüche

1. Bewegliches Fensterelement mit einer in einem Schacht (14) eines Wandelements (18) versenkbaren Fensterscheibe (12), welche gegenüber dem Wandelement (18) mittels Führungselementen geführt ist und mittels eines motorischen Antriebs (26) zwischen einer offenen und einer geschlossenen Endlage verfahrbar ist,
**dadurch gekennzeichnet,**
**daß** der motorische Antrieb (26) in einem Ungleichförmigkeitsmodus betätigbar ist, in welchem die Verfahrgeschwindigkeit der Fensterscheibe (12) in einer Transportphase nach Abschluß einer Anlaufphase wiederholt zwischen einem relativ hohen und einem relativ niedrigen Geschwindigkeitswert variiert wird.

2. Bewegliches Fensterelement nach Anspruch 1, **dadurch gekennzeichnet, daß** der motorische Antrieb (26) einen Elektromotor (28) aufweist.

3. Bewegliches Fensterelement nach Anspruch 2, **dadurch gekennzeichnet, daß** der motorische Antrieb (26) eine vorzugsweise elektronische Antriebssteuerung aufweist, die die Drehzahl des Elektromotors (28) in der Transportphase wiederholt zwischen einem ersten oberen und einem zweiten unteren Wert hin und her schaltet.

4. Bewegliches Fensterelement nach Anspruch 2, **dadurch gekennzeichnet, daß** der motorische Antrieb (26) eine vorzugsweise elektronische Antriebssteuerung aufweist, die in der Transportphase einer Basisdrehzahl des Elektromotors (28) eine Drehzahlkomponente mit im wesentlichen sinusförmigem Verlauf überlagert.

5. Bewegliches Fensterelement nach einem der Ansprüche 1 bis 4, **dadurch gekennzeichnet, daß** zur Bestimmung des Widerstandsmoments, das beim Verfahren der Fensterscheibe (12) dem motorischen Antrieb (26) entgegenwirkt, eine Sensorvorrichtung vorgesehen ist, deren Meßwerte einer Aktivierungsvorrichtung zugeführt werden, die den Ungleichförmigkeitsmodus des motorischen Antriebs (26) aktiviert.

6. Bewegliches Fensterelement nach einem der Ansprüche 2 bis 4, **dadurch gekennzeichnet, daß** zur Bestimmung des Widerstandsmoments, das beim Verfahren der Fensterscheibe (12) dem Elektromotor (28) entgegenwirkt, die Leistungsaufnahme des Elektromotors (28) überwachende Meßwandler vorgesehen sind, deren Ausgangssignale einer Aktivierungsvorrichtung zugeführt werden, die den Ungleichförmigkeitsmodus des motorischen Antriebs (26) aktiviert.

7. Bewegliches Fensterelement nach einem der Ansprüche 1 bis 6, **dadurch gekennzeichnet, daß** als ein Führungselement eine gummielastische Schachtabdichtung (40) mit einem Anti-Quietsch-Belag vorgesehen ist.

8. Bewegliches Fensterelement nach einem der Ansprüche 1 bis 7, **dadurch gekennzeichnet, daß** das Wandelement (18) ein Kabriolettürflügel ist.

9. Motorsteuerung für einen elektrischen Fensterhebermotor, **gekennzeichnet durch** ein Steuerungsmodul, das im aktivierten Zustand den elektrischen Fensterhebermotor (28) mit ungleichförmiger, wiederholt zwischen einem ersten oberen und einem zweiten unteren Drehzahlwert hin und her geschalteter Drehzahl antreibt.

## Claims

1. Movable window unit comprising a window glass (12) which can be lowered into a well (14) of a panel member (18), the window glass (12) being guided relative to the panel (18) member by means of guide members and being displaceable by means of a motorised drive (26) between an open end position and a closed end position,
**characterised in that**,
the motorised drive (26) can be actuated in a non-uniform mode of operation in which the speed of displacement of the window glass (12) is varied repeatedly between a relatively high and a relatively low speed value in a translocation phase after conclusion of a start-up phase.

2. Movable window unit according to claim 1, **characterised in that** the motorised drive (26) comprises an electric motor (28).

3. Movable window unit according to claim 2, **characterised in that** the motorised drive (26) comprises a preferably electronic drive control which in the translation phase repeatedly switches the speed of rotation of the electric motor (28) back and forth between a first, upper value and a second, lower value.

4. Movable window unit according to claim 2, **characterised in that** the motorised drive (26) comprises a preferably electronic drive control which in the translocation phase superimposes on a basic speed of rotation of the electric motor (28) a speed of rotation component having a substantially sinusoidal character.

5. Movable window unit according to one of claims 1 to 4, **characterised in that** in order to determine the moment of resistance which counteracts the motorised drive (26) upon displacement of the window glass (12), a sensor device is provided whose output values are fed to an activating device which activates the non-uniform mode of operation of the motorised drive (26).

6. Movable window unit according to one of claims 2 to 4, **characterised in that** in order to determine the moment of resistance which counteracts the electric motor (28) upon displacement of the window glass (12), measuring transformers are provided monitoring the power consumption of the electric motor (28) and whose output signals are fed to an activating device which activates the non-uniform mode of operation of the motorised drive (26).

7. Movable window unit according to one of claims 1 to 6, **characterised in that** an elastic rubber well seal (40) having an anti-squeaking overlay is provided as a guide member.

8. Movable window unit according to one of claims 1 to 7, **characterised in that** the panel member (18) is the door panel of a convertible vehicle.

9. Motor control for an electric window-raising motor, **characterised by** a control module which in the activated state drives the electric window-raising motor (28) with a non-uniform speed of rotation which is repeatedly switched back and forth between a first, upper value and a second, lower value of the speed of rotation.

## Revendications

1. Elément mobile de fenêtre comportant une vitre de fenêtre (12), pouvant s'abaisser dans un puits (14) d'un élément de paroi (18) et étant guidée au moyen d'éléments de guidage par rapport à l'élément de paroi (18) en pouvant se déplacer, au moyen d'un entraînement par moteur (26) entre une position finale d'ouverture et une position finale de fermeture,
**caractérisé en ce que** l'entraînement par moteur (26) peut être actionné suivant un mode non uniforme, dans lequel, au cours d'une phase de transport, après la fin d'une phase de démarrage, on fait varier, alternativement et de façon répétitive, la vitesse de déplacement de la vitre de fenêtre (12) entre une valeur de vitesse relativement élevée et une valeur de vitesse relativement faible.

2. Elément mobile de fenêtre suivant la revendication 1, **caractérisé en ce que** l'entraînement à moteur (26) présente un moteur électrique (28).

3. Elément mobile de fenêtre suivant la revendication 2, **caractérisé en ce que** l'entraînement à moteur (26) présente une commande d'entraînement de préférence électronique, qui enclenche alternativement la vitesse de rotation du moteur électrique (28) de façon répétitive dans la phase de transport, entre une première valeur supérieure et une deuxième valeur inférieure.

4. Elément mobile de fenêtre suivant la revendication 2, **caractérisé en ce que** l'entraînement à moteur (26) présente une commande d'entraînement, de préférence électronique, qui, au cours de la phase de transport, superpose à une vitesse de rotation de base du moteur électrique (28) une composante de vitesse de rotation comportant un tracé essentiellement de forme sinusoïdale.

5. Elément mobile de fenêtre suivant l'une des revendications 1 à 4, **caractérisé en ce que**, pour déterminer le couple résistant qui s'oppose à l'entraînement à moteur (26) lors du déplacement de la vitre de fenêtre (12), il est prévu un dispositif de détection, dont les valeurs de mesure sont envoyées à un dispositif d'activation, qui active le mode non uniforme de l'entraînement à moteur (26).

6. Elément mobile de fenêtre suivant l'une des revendications 2 à 4, **caractérisé en ce que**, pour déterminer le couple résistant qui s'oppose au moteur électrique (28) lors du déplacement de la vitre de fenêtre (12), il est prévu des transducteurs de mesure surveillant la consommation de puissance du moteur électrique (28), transducteurs de puissance dont les signaux de sortie sont envoyés à un dispositif d'activation, qui active le mode non uniforme de l'entraînement à moteur (26).

7. Elément mobile de fenêtre suivant l'une des revendications 1 à 6, **caractérisé en ce qu'**un joint d'étanchéité de puits (40) en caoutchouc élastique avec revêtement anti-grincement est prévu comme élément de guidage.

8. Elément mobile de fenêtre suivant l'une des revendications 1 à 7, **caractérisé en ce que** l'élément de paroi (18) est un battant de porte de véhicule décapotable.

9. Commande de moteur pour un moteur électrique de levage de fenêtre, **caractérisé par** un module de commande qui entraîne, en état activé, le moteur électrique (28) de levage de fenêtre avec une vitesse de rotation non uniforme, en étant enclenché de façon répétitive alternativement entre une première vitesse de rotation supérieure et une deuxième vitesse de rotation inférieure.
